(19) Europäisches Patentamt
European Patent Office
Office européen des brevets

(11) **EP 1 567 982 B1**

(12) **EUROPÄISCHE PATENTSCHRIFT**

(45) Veröffentlichungstag und Bekanntmachung des Hinweises auf die Patenterteilung:
**14.01.2009 Patentblatt 2009/03**

(21) Anmeldenummer: **03809717.6**

(22) Anmeldetag: **12.09.2003**

(51) Int Cl.:
*G06T 5/50* (2006.01)   *G06T 7/00* (2006.01)
*G08B 13/196* (2006.01)   *G01S 17/02* (2006.01)

(86) Internationale Anmeldenummer:
**PCT/EP2003/010224**

(87) Internationale Veröffentlichungsnummer:
**WO 2004/040515 (13.05.2004 Gazette 2004/20)**

(54) **VERFAHREN UND VORRICHTUNG ZUR SCHATTENKOMPENSATION IN DIGITALEN BILDERN**

METHOD AND DEVICE FOR COMPENSATING FOR SHADOWS IN DIGITAL IMAGES

PROCEDE ET DISPOSITIF DE COMPENSATION DES TACHES DANS DES IMAGES NUMERIQUES

(84) Benannte Vertragsstaaten:
**DE FR GB IT**

(30) Priorität: **31.10.2002 DE 10250705**

(43) Veröffentlichungstag der Anmeldung:
**31.08.2005 Patentblatt 2005/35**

(73) Patentinhaber: **Bayerische Motoren Werke Aktiengesellschaft**
**80809 München (DE)**

(72) Erfinder:
• **KOCH, Carsten**
  **21368 Dahlenburg (DE)**
• **YOON, Jeong-Suk**
  **80809 München (DE)**
• **EISENMANN, Lutz**
  **85256 Vierkirchen (DE)**

(56) Entgegenhaltungen:
WO-A-99/04378       DE-A- 10 062 977
US-B1- 6 323 477

**Beschreibung**

Die Erfindung bezieht sich auf ein Verfahren zur Erzeugung eines berechneten, digitalen Bildes einer von einer ersten Beleuchtungsquelle unter einem ersten Beleuchtungswinkel mit unterschiedlichen Beleuchtungsstärken beleuchtbaren Szene, wobei von einem Bildsensor eine Mehrzahl von Einzelbildern der Szene bei unterschiedlichen Beleuchtungsbedingungen aufgenommen und in einer Datenverarbeitungsvorrichtung zur Erzeugung eines Ergebnisbildes pixelweise miteinander verrechnet werden.

Die Erfindung bezieht sich weiter auf eine Vorrichtung zur Erzeugung eines berechneten, digitalen Bildes, umfassend eine erste Beleuchtungsquelle, mit der eine aufzunehmende Szene unter einem ersten Beleuchtungswinkel mit unterschiedlichen Beleuchtungsstärken beleuchtbar ist, einen Bildsensor zur bildgebenden Erfassung der beleuchteten Szene und Ausgabe von aus einer Vielzahl von Pixeln bestehenden, digitalen Einzelbildern der Szene, Steuerungsmittel zur koordinierten Ansteuerung der Beleuchtungsquelle und des Bildsensors, sodass Einzelbilder der Szene unter unterschiedlichen Beleuchtungsbedingungen aufnehmbar sind, und eine Datenverarbeitungsvorrichtung zur pixelweisen Verrechnung wenigstens einiger der Einzelbilder miteinander.

Derartige Verfahren und Vorrichtungen sind beispielsweise bekannt von Anwendungen zur bildgestützten Überwachung oder Ansteuerung unterschiedlichster Prozesse, bei denen eine automatische Analyse einer Szene gewünscht wird und zu deren Vereinfachung eine Bildvorbearbeitung durchgeführt wird, die bestimmte Störeffekte eliminieren soll.

Aus DE 100 62 977 A1 sind z.B. ein Verfahren und eine Vorrichtung zur Überwachung des Innenraums eines Kraftfahrzeuges bekannt, wobei eine Infrarot- (IR-) sensitive CMOS-Digitalkamera Einzelbilder der Szene, nämlich des Kraftfahrzeuginnenraums, aufnimmt. In dem Kraftfahrzeuginnenraum ist weiter eine IR-Strahlungsquelle zur Beleuchtung der Szene vorgesehen. Zur Erzeugung eines Ergebnisbildes werden jeweils zwei Einzelbilder in rascher, zeitlicher Folge aufgenommen. Während der Aufnahme des ersten Einzelbildes wird die Szene dabei von der IR-Strahlungsquelle mit voller Leistung ausgeleuchtet. Während der Aufnahme des zweiten Einzelbildes wird die Szene von der IR-Strahlungsquelle mit reduzierter Leistung oder, im Extremfall, gar nicht beleuchtet. Zur Erzeugung des Ergebnisbildes werden die beiden Einzelbilder dann pixelweise voneinander subtrahiert, sodass die Pixelwerte des Ergebnisbildes um den Anteil der von der IR Strahlungsquelle unabhängigen Hintergrundstrahlung, des sog. Offsets, korrigiert sind.

Als Ziel einer Überwachung des Innenraums eines Kraftfahrzeuges ist z. B. aus der genannten Druckschrift eine Sicherung gegen unbefugten Zugang bekannt. Als weiteres Ziel ist z. B. aus DE199 08 167 A1 die Überwachung der Positionen von im Fahrzeug befindlichen Personen bekannt. Diese dynamische Art der Überwachung dient beispielsweise der Steuerung passiver Sicherheitssysteme, wie etwa Airbags.

Insbesondere bei dieser Art der Überwachungssysteme ist es wichtig, dass die interessierenden Szenengegenstände, also z. B. die Personen, deren Positionen erfasst werden sollen, zuverlässig von ihren eigenen Schatten oder Schatten, die von anderen Szenengegenständen geworfen werden, unterschieden werden können. Diese, für das menschliche Gehirn einfache Aufgabe stellt für automatisierte Systeme erhebliche Schwierigkeiten dar, die einen umfangreichen und damit sehr zeitintensiven Rechenaufwand erforderlich machen. Gerade der Zeitfaktor ist jedoch bei dynamischen Systemen, und insbesondere passiven Sicherheitssystemen äußerst kritisch.

Aus der WO 99/04378 A ist ein Bildverarbeitungssystem zur Beobachtung des Verkehrsflusses bekannt. Zur Vermeidung von Schatten im aufgenommenen Bild werden zwei IR-Sender verwendet, die die Szene aus unterschiedlichen Beleuchtungswinkeln ausleuchten. Die Beleuchtungsstärken der IR-Sender sind variierbar.

Es ist daher eine Aufgabe der vorliegenden Erfindung, ein gattungsgemäßes Verfahren derart weiterzubilden, dass Schatteneffekte von Szenengegenständen auf einfache Weise kompensierbar sind.

Es ist eine weitere Aufgabe der vorliegenden Erfindung, eine gattungsgemäße Vorrichtung derart weiterzubilden, dass sie zur Durchführung des erfindungsgemäßen Verfahrens geeignet ist.

Die erstgenannte Aufgabe wird in Verbindung mit den Merkmalen des Oberbegriffs von Anspruch 1 dadurch gelöst, dass wenigstens eine weitere Beleuchtungsquelle vorgesehen ist, durch die die Szene unter einem von dem Beleuchtungswinkel der ersten Beleuchtungsquelle verschiedenen Beleuchtungswinkel mit unterschiedlichen Beleuchtungsstärken beleuchtbar ist, wobei die unterschiedlichen Beleuchtungsbedingungen bei der Aufnahme der Einzelbilder durch unterschiedliche Kombinationen der Beleuchtungsstärken der ersten und der wenigsten einen weiteren Beleuchtungsquelle erzielt werden.

Die Wirkung besteht darin, dass Einzelbilder derselben Szenengegenstände erzeugt werden, die unterschiedlichen Beleuchtungsbedingungen aber dafür sorgen, dass die Gegenstände während jeder Aufnahme eines Einzelbildes anders ausgerichtete Schatten werfen, in jedem Einzelbild also die Werte anderer Pixel durch den Schattenwurf beeinflusst werden. Hierdurch wird es ermöglicht, im Rahmen der nachfolgenden Verrechnung der Einzelbilder miteinander den Einfluss des Schattenwurfs zu kompensieren und zu einem im Wesentlichen schattenfreien Ergebnisbild zu gelangen.

Zur Berechnung eines Ergebnisbildes werden drei Einzelbilder aufgenommen, wobei zwei Beleuchtungsquellen derart angesteuert werden, dass bei der Aufnahme eines ersten Einzelbildes die erste Beleuchtungsquelle die Szene mit einer ersten Beleuchtungsstärke und die zweite Beleuchtungsquelle die Szene mit einer zweiten, von der ersten verschiedenen Beleuchtungsstärke beleuchtet, bei der Aufnahme eines zweiten Einzelbildes die erste Beleuchtungsquelle die Szene mit der zweiten Beleuchtungsstärke und die zweite Beleuchtungsquelle die Szene mit der ersten Beleuchtungsstärke beleuchtet und bei der Aufnahme eines dritten Einzelbildes beide Beleuchtungsquellen die Szene jeweils mit der zweiten Beleuchtungsstärke beleuchten.

Hierdurch wird die Verrechnung der Einzelbilder miteinander besonders einfach. Zum einen ist nur eine geringe Zahl von Einzelbildem, nämlich drei, erforderlich. Zum anderen werden durch den erfindungsgemäßen Austausch der Beleuchtungsstärken zwischen den beiden Beleuchtungsquellen im ersten und im zweiten Einzelbild im Wesentlichen symmetrische Beleuchtungsmuster erzeugt, die eine Weiterverarbeitung der Daten erleichtern.

Zur Vereinfachung der weiteren Beschreibung wird folgende Definition eingeführt. Der Wert lj (n) eines Pixels n in einem Einzelbild j lässt sich vereinfacht darstellen als

$$I_j(n) = \alpha \cdot \rho(n) \cdot E(n) \qquad (1)$$

wo p (n) die Oberflächenreflektanz des im Pixel n abgebildeten Szenenpunktes, E (n) die diesem Szenenpunkt zugeführten Bestrahlungsstärke und a ein Proportionalitätsfaktor ist, der Einflüsse wie die Lichtstärke der verwendeten Detektoroptik, die Effizient des Detektors und anderes beschreibt und der der Einfachheit halber hier ohne Beschränkung der Allgemeinheit als für alle Pixel gleich eins ($\alpha = 1$) angenommen wird.

Zwar sind verschiedene Bildverarbeitungsverfahren denkbar, bei denen die vom Schattenwurf beeinflussten Pixel der Einzelbilder als solche identifiziert und ihre Werte bei der Erzeugung des Ergebnisbildes zur Kompensation des Schatteneffektes korrigiert werden können. Besonders günstig ist es jedoch, wenn die Verrechnung der Einzelbilder miteinander derart erfolgt, dass bei gleicher Behandlung aller Pixelpositionen je zwei Pixel des Ergebnisbildes, auf welchem von wenigstens einer Beleuchtungsquelle beleuchtete Szenenpunkte abgebildet werden, die von unterschiedlichen Beleuchtungsquellen oder unterschiedlichen Anzahlen von Beleuchtungsquellen direkt beleuchtet werden, bis auf einen die Reflektanz des jeweiligen Szenenpunktes repräsentierenden Faktor im Wesentlichen den gleichen Pixelwert aufweisen.

Durch die Gleichbehandlung aller Pixelpositionen, d. h. die Anwendung der gleichen mathematischen Operationen auf das gesamte Bild, können zeitaufwendige Operationen in dem Bild selbst, wie z. B. Algorithmen zur Erkennung von Konturen o. ä., vermieden werden. Solche Verfahren können beispielsweise im Rahmen einer nachfolgenden Analyse der Szene erforderlich sein. Bei der vorbereitenden Erzeugung eines Eingangsbildes für die Analyse, also des Ergebnisbildes des hier beschriebenen, erfindungsgemäßen Verfahrens ist es aus Zeitgründen jedoch günstiger, sie zu vermeiden. Durch die Gleichbehandlung aller ihrer jeweiligen Pixel können die Einzelbilder und ggf. aus ihnen errechnete Zwischenbilder in ihrer jeweiligen Gesamtheit als Variablen mathematischer Operationen betrachtet werden, welche z. B. von speziellen Bildverarbeitungsprozessoren auf alle oder wenigstens einen Teil der Pixel parallel angewendet werden können. Hierdurch lässt sich ein wesentlicher Zeitvorteil gegenüber interpretierenden Verfahren erzielen, die den eigentlichen Bildinhalt zum Gegenstand haben.

Die auf die Bilder anzuwendenden Operationen sind so zu wählen, dass jeder Wert eines Pixels n des Ergebnisbildes im Wesentlichen die Reflektanz p (n) der Oberfläche des im Pixel n abgebildeten Szenenpunktes repräsentiert. Dies bedeutet, dass Szenenbereiche, die von Schatteneffekten beeinflusst sind, d. h. nicht von allen Beleuchtungsquellen direkt bestrahlt werden, durch die erfindungsgemäße Bildverarbeitung untereinander und in Bezug auf schattenfreie Szenenbereiche angeglichen werden. Mit anderen Worten wird eine ideale, schattenfreie Beleuchtung der Szene simuliert. Szenenbereiche, die von keiner Beleuchtungsquelle beleuchtet werden, also keine relevante Information liefern können, sind dabei vorzugsweise zu ignorieren bzw. auf einen Wert zu setzen, der sie bei einer nachfolgenden, weiteren Bildverarbeitung als ignorierbar kenntlich macht. Auch diese Markierung sollte vorzugsweise unter Gleichbehandlung aller Pixel erfolgen. "Im Wesentlichen" bedeutet in diesem Zusammenhang, dass Unterschiede, die auf anderweitig begründeten Differenzen der Beleuchtungsstärke beruhen, z. B. auf Abstandsunterschieden der Szenenpunkte von den Beleuchtungsquellen und/oder dem Bildsensor, unberücksichtigt bleiben.

Vorteilhaft ist es bei der Verrechnung der Einzelbilder miteinander vorzugsweise solche Operationen zu verwenden, die mit geringem Rechenaufwand durchführbar sind und nicht zu einer übermäßigen Erhöhung des Pixelrauschens führen. So sind insbesondere Divisionen durch rauschbelastete Werte nach Möglichkeit zu vermeiden. Als vorteilhaft hat es sich dagegen erwiesen, wenn die Verrechnung der Einzelbilder miteinander die Berechnung der pixelweisen Differenz und/oder Summe des ersten und des zweiten Einzelbildes und/oder der Summe aus dem Betrag der Differenz und der Summe des ersten und des zweiten Einzelbildes umfasst. Außerdem hat es sich als günstig erwiesen, eine pixelweise Subtraktion des dritten Einzelbildes durchzuführen.

Besonders bevorzugt wird eine Ausführungsform des erfindungsgemäßen Verfahrens, bei dem zur Berechnung des Ergebnisbildes eine Kombination von mathematischen Operationen angewendet wird, die sich nach folgender Formel schreiben lässt:

$$I_{out} = |I_1 - I_2| + (I_1 + I_2) - 2 \cdot I_3 \qquad\qquad (2)$$

wo $I_{out}$ der Wert eines Pixels des Ergebnisbildes, $I_1$ der Wert des korrespondierenden Pixels des ersten Einzelbildes, $I_2$ der Wert des korrespondierenden Pixels des zweiten Einzelbildes und $I_3$ der Wert des korrespondierenden Pixels des dritten Einzelbildes ist. Selbstverständlich ist diese Formel symbolisch und so zu verstehen, dass additive Korrekturterme oder Korrekturfaktoren, die die bildtechnische Wirkung der Operation gemäß Gleichung (2) nicht wesentlich ändern, ebenfalls erfasst sind.

Die oben erwähnte, zweitgenannte Aufgabe wird in Verbindung mit den Merkmalen des Oberbegriffs von Anspruch 9 dadurch gelöst, dass wenigstens eine weitere Beleuchtungsquelle vorgesehen ist, mit der die Szene unter einem zweiten, von dem ersten verschiedenen Beleuchtungswinkel mit unterschiedlichen Beleuchtungsstärken beleuchtbar ist, und die Beleuchtungsquellen durch die Steuerungsmittel derart ansteuerbar sind, dass die unterschiedlichen Beleuchtungsbedingungen bei der Aufnahme der Einzelbilder durch unterschiedliche Kombinationen der Beleuchtungsstärken der ersten und der wenigsten einen weiteren Beleuchtungsquelle erzielbar sind.

Zur Berechnung eines Ergebnisbildes werden drei Einzelbilder aufgenommen, wobei zwei Beleuchtungsquellen derart angesteuert werden, dass bei der Aufnahme eines ersten Einzelbildes die erste Beleuchtungsquelle die Szene mit einer ersten Beleuchtungsstärke und die zweite Beleuchtungsquelle die Szene mit einer zweiten, von der ersten verschiedenen Beleuchtungsstärke beleuchtet, bei der Aufnahme eines zweiten Einzelbildes die erste Beleuchtungsquelle die Szene mit der zweiten Beleuchtungsstärke und die zweite Beleuchtungsquelle die Szene mit der ersten Beleuchtungsstärke beleuchtet und bei der Aufnahme eines dritten Einzelbildes beide Beleuchtungsquellen die Szene jeweils mit der zweiten Beleuchtungsstärke beleuchten.

Dies ist die grundlegende vorrichtungstechnische Voraussetzung dafür, dass das oben beschriebene Verfahren durchführbar ist. Die Voraussetzung dafür, dass das erfindungsgemäße Verfahren auch in den oben beschriebenen, bevorzugten Ausführungsformen durchführbar ist, ist die entsprechend geeignete Einrichtung der Steuerungsmittel sowie der Datenverarbeitungsanlage. Die Vorteile die sich daraus ergeben, dass die vorzugsweise programmtechnische Einrichtung der Steuerungsmittel und der Datenverarbeitungsanlage die Durchführung des erfindungsgemäßen Verfahrens gestattet, sind aus den oben beschriebenen Vorteilen des Verfahrens selbst ersichtlich.

Obwohl das erfindungsgemäße Verfahren grundsätzlich für alle Arten von Beleuchtungsstrahlung, z.B. elektromagnetische Strahlung im optischen, UV-, IR-, Röntgen-, Mikrowellen- und Funkwellenbereich oder akustische Strahlung in beliebigen Frequenzbereichen, insbesondere im Ultraschallbereich geeignet ist, hat sich die Anwendung im nahen IR-Bereich als besonders zuverlässig und kostengünstig erwiesen. Insbesondere bei Anwendungen in der Umgebung von Personen ist dieser Frequenzbereich wegen seiner Unsichtbarkeit für das menschliche Auge, seiner relativen Ungefährlichkeit bei handhabbaren Intensitäten und seiner gleichzeitig noch guter räumlicher Auflösung aufgrund der noch kurzen Wellenlängen besonders geeignet.

Ein besonders vorteilhafter Anwendungsbereich des erfindungsgemäßen Verfahrens und der erfindungsgemäßen Vorrichtung ist die Überwachung eines Innenraums eines Kraftfahrzeugs; sei es beispielsweise zur Diebstahlsicherung oder zur Erfassung von Insassenpositionen z.B. zur Ansteuerung passiver Sicherheitssysteme.

Wie bereits erwähnt, vernachlässigen die obigen Ausführungen den Einfluss des Abstandes der Szenenpunkte von den Beleuchtungsquellen. Dies ist in vielen Fällen gerechtfertigt, insbesondere, wenn kein Abstand zwischen einem Szenenpunkt und einer Beleuchtungsquelle klein ist gegen einen Abstand zwischen zwei Szenenpunkten. D.h. mit anderen Worten, dass die Beleuchtungsquellen im Wesentlichen gleich weit von allen Szenenpunkte entfernt angeordnet sind. In diesem Fall ist die oben implizit gemachte Näherung, dass die Beleuchtungsstärke E(n) für alle direkt bestrahlten Szenenpunkte in gleicher Weise von der Strahlungsintensität der jeweiligen Beleuchtungsquellen abhängt, korrekt. Zudem ist es für viele Anwendungen ausreichend, wenn die Schatteneffekte zwar nicht völlig kompensiert aber wesentlich reduziert werden.

Weitere Einzelheiten der Erfindung ergeben sich aus der nachstehenden, ausführlichen Beschreibung und den beigefügten Zeichnungen, in denen eine bevorzugte Ausführungsform der Erfindung beispielhaft veranschaulicht ist.

In den Zeichnungen zeigen:

Figur 1:  eine schematische Darstellung eines Kraftfahrzeugs mit erfindungsgemäßer Innenraumüberwachung,

Figur 2:  eine schematische Darstellung unterschiedlicher Schatteneffekte im Rahmen der Anwendung des erfindungsgemäßen Verfahrens,

Figur 3: ein Diagramm zur Veranschaulichung unterschiedlicher Beleuchtungsbereiche einer Szene.

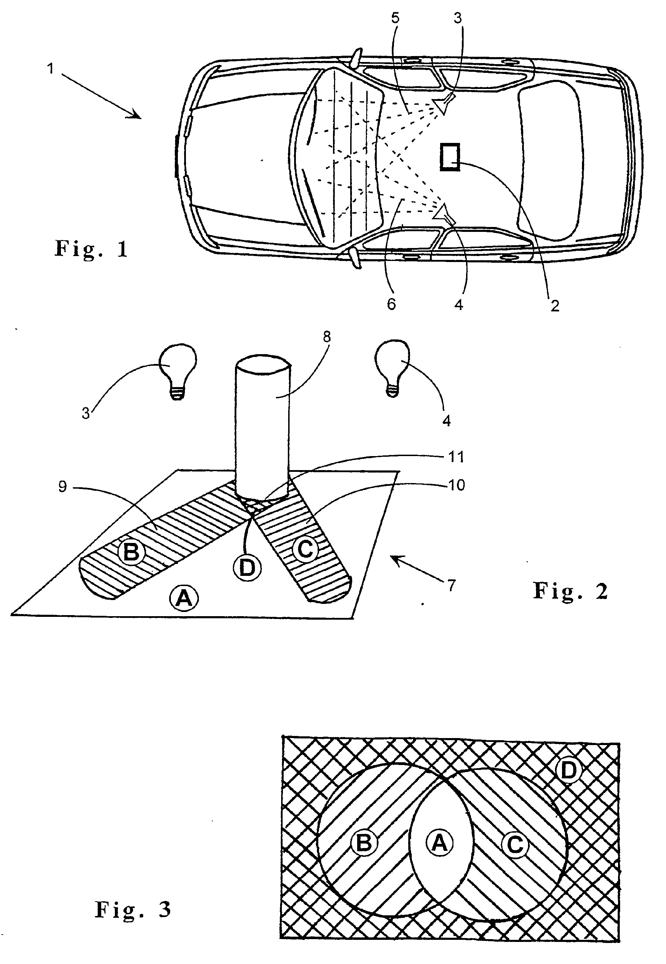

Fig. 1 zeigt in Draufsicht ein Kraftfahrzeug 1, in dem in zentraler Position am Dachhimmel ein Bildsensor 2 angeordnet ist, der den Innenraum des Fahrzeugs 1 im nahen IR-Spektralbereich wenigstens teilweise erfasst und in bekannter Weise digitale Bilder davon erzeugt. Der Bildsensor 2 wird von nicht dargestellten Steuerungsmittel angesteuert und liefert seine Bilddaten an eine ebenfalls nicht dargestellte Datenverarbeitungsanlage. Beide Vorrichtungen können z.B. in einem Bordcomputer integriert sein, der in modernen Fahrzeugen in der Regel ohnehin vorhanden ist. Selbstverständlich ist auch die Nutzung eigenständiger, spezialisierter Einheiten möglich.

Seitlich im Bereich der B-Säulen des Fahrzeugs ist jeweils eine Leuchtdiode 3, 4 oder eine Gruppe von Leuchtdioden angeordnet, die Licht 5, 6 im nahen IR-Bereich in den Innenraum des Fahrzeugs aussenden. Die Leuchtdioden werden, ebenso wie der Bildsensor 2, der das von der Szene reflektierte Beleuchtungslicht der Dioden detektiert, von den nicht dargestellten Steuerungsmitteln in Bezug auf ihre Beleuchtungsstärke und ihre Beleuchtungszeit angesteuert.

Fig. 2 zeigt schematisch eine Szene 7 mit einem Szenengegenstand 8, der bestimmte Szenenbereiche 9, 10, 11 gegen die Beleuchtung durch eine oder beide der Beleuchtungsquellen 3 und 4 abschattet. Zum Zwecke der leichteren Verständlichkeit der nachfolgenden, beispielhaften Berechnungen sind die durch ihre Schattencharakteristik unterschiedenen Bereiche des Szene 7 zusätzlich mit Großbuchstaben gekennzeichnet, die auch in Fig. 3 verwendet werden. A bezeichnet dabei Bereiche, die von beiden Beleuchtungsquellen 3 und 4 direkt beleuchtet werden. B bezeichnet Bereiche, die nur von der ersten Beleuchtungsquelle 3 und C solche Bereiche, die nur von der zweiten Beleuchtungsquelle 4 direkt beleuchtet werden. D bezeichnet Bereiche, die im Kernschatten des Szenenobjektes 8 liegen und von keiner der Beleuchtungsquellen 3, 4 direkt beleuchtet werden.

Fig. 3 zeigt ein Diagramm zweier sich überschneidender Mengenkreise, die jeweils als Menge beleuchteter Szenenpunkte aufgefasst werden können, wobei die Bezeichnung der Mengen gemäß der obigen Erläuterung erfolgt.

Nachfolgend sollen die einzelnen Schritte einer besonders vorteilhaften Ausführungsform des erfindungsgemäßen Verfahrens näher erläutert werden.

Zur Aufnahme eines ersten Einzelbildes wird die Szene 7 von der ersten Lichtquelle 3 mit der Beleuchtungsstärke E1 und von der zweiten Lichtquelle 4 mit der Beleuchtungsstärke E2 < E1 bestrahlt. Weiter wird angenommen, die gesamte Szene sei zusätzlich von einer von den Beleuchtungsquellen 3, 4 unabhängigen, diffusen Hintergrundstrahlung E0 beleuchtet, die für alle Szenenpunkte gleich sei. Dann ergibt sich mit Gleichung (1):

A: für Pixel, auf die ein Szenenpunkt aus dem Szenenbereich A abgebildet wird

$$I_1 = \rho \cdot \left( E_1 + E_2 + E_0 \right), \qquad \text{(A1)}$$

B: für Pixel, auf die ein Szenenpunkt aus dem Szenenbereich B abgebildet wird

$$I_1 = \rho \cdot \left( E_1 + E_0 \right), \qquad \text{(B1)}$$

C: für Pixel, auf die ein Szenenpunkt aus dem Szenenbereich C abgebildet wird

$$I_1 = \rho \cdot \left( E_2 + E_0 \right), \qquad \text{(C1)}$$

D: für Pixel, auf die ein Szenenpunkt aus dem Szenenbereich D abgebildet wird

$$I_1 = \rho \cdot E_0. \qquad \text{(D1)}$$

Zur Aufnahme eines zweiten Einzelbildes werden bei der bevorzugten Ausführungsform die Beleuchtungsverhältnisse symmetrisch vertauscht, d.h. die Szene 7 wird von der ersten Lichtquelle 3 mit der Beleuchtungsstärke E2 und von der zweiten Lichtquelle 4 mit der Beleuchtungsstärke E1 bestrahlt. Dann ergibt sich mit Gleichung (1):

A: für Pixel, auf die ein Szenenpunkt aus dem Szenenbereich A abgebildet wird

$$I_2 = \rho \cdot \left( E_1 + E_2 + E_0 \right), \qquad \text{(A2)}$$

B: für Pixel, auf die ein Szenenpunkt aus dem Szenenbereich B abgebildet wird

$$I_2 = \rho \cdot \left( E_2 + E_0 \right), \qquad \text{(B2)}$$

C: für Pixel, auf die ein Szenenpunkt aus dem Szenenbereich C abgebildet wird

$$I_2 = \rho \cdot \left( E_1 + E_0 \right), \qquad \text{(C2)}$$

D: für Pixel, auf die ein Szenenpunkt aus dem Szenenbereich D abgebildet wird

$$I_2 = \rho \cdot E_0. \qquad \text{(D2)}$$

Zur Aufnahme eines dritten Einzelbildes wird die Szene 7 wird von beiden Lichtquellen 3, 4 mit der Beleuchtungsstärke E2 bestrahlt. Dann ergibt sich mit Gleichung (1):

A: für Pixel, auf die ein Szenenpunkt aus dem Szenenbereich A abgebildet wird

$$I_3 = \rho \cdot \left( 2 \cdot E_2 + E_0 \right), \qquad \text{(A3)}$$

B: für Pixel, auf die ein Szenenpunkt aus dem Szenenbereich B abgebildet wird

$$I_3 = \rho \cdot \left( E_2 + E_0 \right), \qquad \text{(B3)}$$

C: für Pixel, auf die ein Szenenpunkt aus dem Szenenbereich C abgebildet wird

$$I_3 = \rho \cdot \left( E_2 + E_0 \right), \qquad \text{(C3)}$$

D: für Pixel, auf die ein Szenenpunkt aus dem Szenenbereich D abgebildet wird

$$I_3 = \rho \cdot E_0 . \quad \text{(D3)}$$

Diese drei Einzelbilder werden gemäß der bevorzugten Ausführungsform einer pixelweisen, mathematischen Operation gemäß Gl. (2) unterworfen. Dabei können in zwei Zwischenschritten zwei Zwischenbilder I4, I5 erzeugt werden. Das erste Zwischenbild 14 stellt den Betrag der pixelweisen Differenz der ersten beiden Einzelbilder I1, I2 dar.

$$I_4 = |I_1 - I_2| \quad \text{(3)}$$

Dann erhalten die Pixelwerte in den unterschiedlichen Beleuchtungsbereichen folgende Form.

A: für Pixel, auf die ein Szenenpunkt aus dem Szenenbereich A abgebildet wird

$$I_4 = 0 \quad \text{,(A4)}$$

B: für Pixel, auf die ein Szenenpunkt aus den Szenenbereich B abgebildet wird

$$I_4 = \rho \cdot (E_1 - E_2), \quad \text{(B4)}$$

C: für Pixel, auf die ein Szenenpunkt aus den Szenenbereich C abgebildet wird

$$I_4 = \rho \cdot (E_1 - E_2), \quad \text{(C4)}$$

D: für Pixel, auf die ein Szenenpunkt aus den Szenenbereich D abgebildet wird

$$I_4 = 0 \quad \text{.(D4)}$$

Das zweite Zwischenbild 15 stellt die pixelweise Summe der ersten beiden Einzelbilder I1, I2 dar.

$$I_5 = I_1 + I_2 \quad \text{(4)}$$

Dann erhalten die Pixelwerte in den unterschiedlichen Beleuchtungsbereichen folgende Form.

A: für Pixel, auf die ein Szenenpunkt aus dem Szenenbereich A abgebildet wird

$$I_5 = 2 \cdot \rho \cdot (E_1 + E_2 + E_0), \qquad \text{(A5)}$$

B: für Pixel, auf die ein Szenenpunkt aus den Szenenbereich B abgebildet wird

$$I_5 = \rho \cdot (E_1 + E_2 + 2 \cdot E_0), \qquad \text{(B5)}$$

C: für Pixel, auf die ein Szenenpunkt aus den Szenenbereich C abgebildet wird

$$I_5 = \rho \cdot (E_1 + E_2 + 2 \cdot E_0), \qquad \text{(C5)}$$

D: für Pixel, auf die ein Szenenpunkt aus den Szenenbereich D abgebildet wird

$$I_5 = 2 \cdot E_0. \qquad \text{(D5)}$$

Das Ergebnisbild Iout schließlich, das sich gemäß Gl. 2 ergibt, kann unter Verwendung der beiden Zwischenbilder 14, 15 beschrieben werden als

Dann erhalten die Pixelwerte in den unterschiedlichen Beleuchtungsbereichen folgende Form.

A: für Pixel, auf die ein Szenenpunkt aus dem Szenenbereich A abgebildet wird

$$I_{out} = I_4 + I_5 - 2 \cdot I_3 \qquad \text{(5)}$$

$$I_{out} = 2 \cdot \rho \cdot (E_1 - E_2), \qquad \text{(A6)}$$

B: für Pixel, auf die ein Szenenpunkt aus den Szenenbereich B abgebildet wird

$$I_{out} = 2 \cdot \rho \cdot (E_1 - E_2), \qquad \text{(B6)}$$

C: für Pixel, auf die ein Szenenpunkt aus den Szenenbereich C abgebildet wird

$$I_{out} = 2 \cdot \rho \cdot \left(E_1 - E_2\right), \qquad \text{(C6)}$$

D: für Pixel, auf die ein Szenenpunkt aus den Szenenbereich D abgebildet wird

$$I_{out} = 0. \qquad \text{(D6)}$$

Dieses Ergebnis bedeutet, dass in dem Ergebnisbild in allen Bildbereichen, die Szenenbereiche darstellen, welche von wenigstens einer Beleuchtungsquelle 3, 4 direkt beleuchtet werden, die Schatteneffekte kompensiert sind und sich die Pixelwerte im Wesentlichen nur durch den Reflektanzwert des jeweiligen Szenenpunktes, also die tatsächlich interessierende Information, unterscheiden. Das bedeutet, bildlich gesprochen, dass durch das erfindungsgemäße Verfahren eine ideale, schattenfreie Lichtquelle der Beleuchtungsstärke 2*(E1 - E2) simuliert werden kann. Lediglich diejenigen Szenenbereiche, die von keiner Beleuchtungsquelle direkt bestrahlt werden, werden im Wesentlichen auf Null gesetzt. Dies entspricht einer Offset-Korrektur des Bildes, und führt zu einem Verwerfen von Pixeln, die keine relevante Information tragen.

Natürlich ist die detaillierte Beschreibung der bevorzugten Ausführungsform lediglich beispielhaft zu verstehen. Der Fachmann wird auch erkennen, dass die Verwendung von Korrekturfaktoren oder -termen, die z.B. besondere geometrische Bedingungen wiederspiegeln, den Kern der vorliegenden Erfindung wie in den unabhängigen Ansprüchen 1 und 9 definiert nicht berühren.

## Patentansprüche

1. Verfahren zur Erzeugung eines berechneten, digitalen Bildes einer von einer ersten Beleuchtungsquelle (3) unter einem ersten Beleuchtungswinkel mit unterschiedlichen Beleuchtungsstärken beleuchtbaren Szene (7), wobei von einem Bildsensor (2) eine Mehrzahl von Einzelbildern der Szene (7) bei unterschiedlichen Beleuchtungsbedingungen aufgenommen und in einer Datenverarbeitungsvorrichtung zur Erzeugung eines Ergebnisbildes pixelweise miteinander verrechnet werden,
**dadurch gekennzeichnet, dass**

   - wenigstens eine weitere Beleuchtungsquelle (4) vorgesehen ist, durch die die Szene (7) unter einem von dem Beleuchtungswinkel der ersten Beleuchtungsquelle (3) verschiedenen Beleuchtungswinkel mit unterschiedlichen Beleuchtungsstärken beleuchtbar ist, wobei
   - die unterschiedlichen Beleuchtungsbedingungen bei der Aufnahme der Einzelbilder durch unterschiedliche Kombinationen der Beleuchtungsstärken der ersten (3) und der wenigsten einen weiteren Beleuchtungsquelle (4) erzielt werden, und
   - zur Berechnung eines Ergebnisbildes drei Einzelbilder aufgenommen werden, wobei zwei Beleuchtungsquellen (3,4) derart angesteuert werden, dass bei der Aufnahme eines ersten Einzelbildes die erste Beleuchtungsquelle (3) die Szene (7) mit einer ersten Beleuchtungsstärke und die zweite Beleuchtungsquelle (4) die Szene (7) mit einer zweiten, von der ersten verschiedenen Beleuchtungsstärke beleuchtet, bei der Aufnahme eines zweiten Einzelbildes die erste Beleuchtungsquelle (3) die Szene (7) mit der zweiten Beleuchtungsstärke und die zweite Beleuchtungsquelle (4) die Szene (7) mit der ersten Beleuchtungsstärke beleuchtet und bei der Aufnahme eines dritten Einzelbildes beide Beleuchtungsquellen (3,4) die Szene (7) jeweils mit der zweiten Beleuchtungsstärke beleuchten.

2. Verfahren nach Anspruch 1, **dadurch gekennzeichnet, dass** die Verrechnung der Einzelbilder miteinander derart erfolgt, dass je zwei Pixel des Ergebnisbildes, auf welche von wenigstens einer Beleuchtungsquelle (3,4) beleuchtete Szenenpunkte abgebildet werden, die von unterschiedlichen Beleuchtungsquellen (3,4) oder unterschiedlichen Anzahlen von Beleuchtungsquellen (3,4) direkt beleuchtet werden, bis auf einen die Reflektanz des jeweiligen Szenenpunktes repräsentierenden Faktor den gleichen Pixelwert aufweisen, indem die auf die Bilder anzuwendenden mathematischen Operationen so gewählt werden, dass jeder Wert eines Pixels des Ergebnisbildes die Reflektanz der Oberfläche des im betreffenden Pixel abgebildeten

3. Verfahren nach Anspruch 1, **dadurch gekennzeichnet, dass** die Verrechnung der Einzelbilder miteinander die Berechnung der pixelweisen Differenz des ersten und des zweiten Einzelbildes umfasst.

4. Verfahren nach einem der Ansprüche 1 oder 3, **dadurch gekennzeichnet, dass** die Verrechnung der Einzelbilder miteinander die Berechnung der pixelweisen Summe des ersten und des zweiten Einzelbildes umfasst.

5. Verfahren nach einem der Ansprüche 1, 3, 4, **dadurch gekennzeichnet, dass** die Verrechnung der Einzelbilder miteinander die Berechnung der pixelweisen Summe aus dem Betrag der Differenz und der Summe des ersten und des zweiten Einzelbildes umfasst.

6. Verfahren nach einem der Ansprüche 1, 3 bis 5, **dadurch gekennzeichnet, dass** die Verrechnung der Einzelbilder miteinander die pixelweise Subtraktion des dritten Einzelbildes umfasst.

7. Verfahren nach einem der Ansprüche 1, 3 bis 6, **dadurch gekennzeichnet, dass** sich die Pixelwerte des Ergebnisbildes darstellen lassen als

$$I_{out} = |I_1 - I_2| + (I_1 + I_2) - 2 \cdot I_3,$$

wo $I_{out}$ der Wert eines Pixels des Ergebnisbildes, $I_1$ der Wert des korrespondierenden Pixels des ersten Einzelbildes, $I_2$ der Wert des korrespondierenden Pixels des zweiten Einzelbildes und $I_3$ der Wert des korrespondierenden Pixels des dritten Einzelbildes ist.

8. Verfahren nach einem der vorangehenden Ansprüche, **dadurch gekennzeichnet, dass** das Ergebnisbild einer weiteren Bildbearbeitung unterworfen wird, deren Resultat einer automatisierten Entscheidungsfindung im Rahmen einer Innenraumüberwachung eines Kraftfahrzeuges (1) dient.

9. Vorrichtung zur Erzeugung eines berechneten, digitalen Bildes, umfassend

- eine erste Beleuchtungsquelle (3), mit der eine aufzunehmende Szene (7) unter einem ersten Beleuchtungswinkel mit unterschiedlichen Beleuchtungsstärken beleuchtbar ist,
- einen Bildsensor (2) zur bildgebenden Erfassung der beleuchteten Szene (3) und Ausgabe von aus einer Vielzahl von Pixeln bestehenden, digitalen Einzelbildern der Szene (7),
- Steuerungsmittel zur koordinierten Ansteuerung der Beleuchtungsquelle (3) und des Bildsensors (2), sodass Einzelbilder der Szene (7) unter unterschiedlichen Beleuchtungsbedingungen aufnehmbar sind und
- eine Datenverarbeitungsvorrichtung zur pixelweisen Verrechnung wenigstens einiger der Einzelbilder miteinander,
**dadurch gekennzeichnet, dass**
- wenigstens eine weitere Beleuchtungsquelle (4) vorgesehen ist, mit der die Szene (7) unter einem zweiten, von dem ersten verschiedenen Beleuchtungswinkel mit unterschiedlichen Beleuchtungsstärken beleuchtbar ist,
- die Beleuchtungsquellen (3,4) durch die Steuerungsmittel derart ansteuerbar sind, dass die unterschiedlichen Beleuchtungsbedingungen bei der Aufnahme der Einzelbilder durch unterschiedliche Kombinationen der Beleuchtungsstärken der ersten und der wenigsten einen weiteren Beleuchtungsquelle (3,4) erzielbar sind, und
- zur Berechnung eines Ergebnisbildes drei Einzelbilder aufgenommen werden, wobei die zwei Beleuchtungsquellen (3,4) derart angesteuert werden, dass bei der Aufnahme eines ersten Einzelbildes die erste Beleuchtungsquelle (3) die Szene (7) mit einer ersten Beleuchtungsstärke und die zweite Beleuchtungsquelle (4) die Szene (7) mit einer zweiten, von der ersten verschiedenen Beleuchtungsstärke beleuchtet, bei der Aufnahme eines zweiten Einzelbildes die erste Beleuchtungsquelle (3) die Szene (7) mit der zweiten Beleuchtungsstärke und die zweite Beleuchtungsquelle (4) die Szene (7) mit der ersten Beleuchtungsstärke beleuchtet und bei der Aufnahme eines dritten Einzelbildes beide Beleuchtungsquellen (3,4) die Szene (7) jeweils mit der zweiten Beleuchtungsstärke beleuchten.

10. Vorrichtung nach Anspruch 9, **dadurch gekennzeichnet, dass** die Steuerungsmittel und die Datenverarbeitungsvorrichtung derart eingerichtet sind, dass ein Verfahren nach einem der Ansprüche 2 bis 7 durchführbar ist.

11. Vorrichtung nach einem der Ansprüche 9 oder 10, **dadurch gekennzeichnet, dass** die Vorrichtung als Teil einer Überwachungseinrichtung in einem Innenraum eines Kraftfahrzeuges (1) integriert ist.

**12.** Vorrichtung nach einem der Ansprüche 9 bis 11, **dadurch gekennzeichnet, dass** die Beleuchtungsquellen (3,4) Licht im nahen Infrarotbereich aussenden.

**Claims**

**1.** A method of producing a calculated digital image of a scene (7) illuminated by a first source (3) at a first angle and at various intensities, wherein an image sensor (2) records a number of individual images of the scene (7) under various lighting conditions and the individual images are offset against one another pixel by pixel in a data processing device in order to produce a final image,
**characterised in that**

- at least one additional source (4) is provided for illuminating the scene (7) at various intensities of brightness and at a different angle from the angle of the first source (3), wherein
- the various lighting conditions when taking the individual images are obtained by various combinations of the brightness of the first three and the at least one additional source (4), and
- a final image is calculated by taking three individual images, wherein two lighting sources (3, 4) are actuated so that when a first individual image is recorded the first source (3) illuminates the scene (7) at a first brightness and the second source (4) illuminates the scene (7) at a second brightness different from the first, when a second individual image is recorded the first source (3) illuminates the scene (7) at the second brightness and the second source (4) illuminates the scene (7) at the first brightness, and when a third individual image is recorded both sources (3, 4) illuminate the scene (7), in each case at the second brightness.

**2.** A method according to claim 1, **characterised in that** the individual images are offset against one another as follows: each pair of pixels of the final image, on which spots of a scene illuminated by at least one source (3, 4) are imaged and are directly illuminated by different sources (3, 4) or different numbers of sources (3, 4), have the same pixel value apart from a factor representing the reflectance of the respective spot, **in that** the mathematical operations applied to the images are chosen so that each value of a pixel of the final image represents the reflectance of the surface of the spot imaged in the respective pixel.

**3.** A method according to claim 1, **characterised in that** the process of offsetting the individual images against one another includes calculating the difference, pixel by pixel, between the first and the second individual image.

**4.** A method according to claim 1 or claim 3, **characterised in that** the process of offsetting the individual images against one another includes calculating the sum, pixel by pixel, of the first and the second individual image.

**5.** A method according to any of claims 1, 3, 4, **characterised in that** the process of offsetting the individual images against one another includes calculation of the sum, pixel by pixel, of the difference and the sum of the first and the second individual image.

**6.** A method according to any of claims 1, 3 to 5, **characterised in that** the process of offsetting the individual images against one another includes subtraction, pixel by pixel, of the third individual image.

**7.** A method according to any of claims 1, 3 to 6, **characterised in that** the pixel values of the final image can be written as follows:

$$I_{out} = |I_1 - I_2| + (I_1 + I_2) - 2 \cdot I_3,$$

where $I_{out}$ is the value of a pixel of the final image, $I_1$ is the value of the corresponding pixel of the first individual image, $I_2$ is the value of the corresponding pixel of the second individual image and $I_3$ is the value of the corresponding pixel of the third individual image.

**8.** A method according to any of the preceding claims, **characterised in that** the final image is additionally processed and the result is used for automatic decision making while monitoring the interior of a motor vehicle (1).

9. A device for producing a calculated digital image comprising:

- a first lighting source (3) for illuminating a required scene (7) at a first angle and at different intensities,
- an image sensor (2) for imaging and detecting the illuminated scene (3) and for outputting digital individual images of the scene (7) comprising a number of pixels,
- control means for co-ordinated actuation of the source (3) and the sensor (2) so that individual images of the scene (7) can be recorded under different lighting conditions, and
- a data processing device for offsetting, pixel by pixel, at least some of the individual images against one another, **characterised in that**
- at least one additional lighting source (4) is provided for illuminating the scene (7) at various intensities and at a second angle different from the first,
- the sources (3, 4) are actuated by the control means so that the various lighting conditions when recording the individual images are obtainable by various combinations of intensities of the first and the at least one second source (3, 4), and
- a final image is calculated by taking three individual images, wherein the two lighting sources (3, 4) are actuated so that when a first individual image is recorded the first source (3) illuminates the scene (7) at a first brightness and the second source (4) illuminates the scene (7) at a second brightness different from the first, when a second individual image is recorded the first source (3) illuminates the scene (7) at the second brightness and the second source (4) illuminates the scene (7) at the first brightness, and when a third individual image is recorded both sources (3, 4) illuminate the scene (7), in each case at the second brightness.

10. A device according to claim 9, **characterised in that** the control means and the data processing device are equipped for working a method according to any of claims 2 to 7.

11. A device according to claim 9 or claim 10, **characterised in that** it forms part of a monitoring device incorporated in the interior of a motor vehicle (1).

12. A device according to any of claims 9 to 11, **characterised in that** the lighting sources (3, 4) emit light in the near infrared region.

**Revendications**

1. Procédé pour générer une image numérique calculée d'une scène (7), éclairée sous un premier angle d'éclairage avec des intensités d'éclairage différentes par une première source d'éclairage (3), un capteur d'image (2) prenant un ensemble d'images simples de la scène (7) dans des conditions d'éclairage différentes pour être traitées par calcul les unes avec les autres, pixel par pixel dans un dispositif de traitement de données pour générer une image résultante, **caractérisé en ce qu'**

- il est prévu au moins une autre source d'éclairage (4) qui éclaire la scène (7) sous un angle d'éclairage différent de l'angle d'éclairage de la première source lumineuse (3) et avec des intensités d'éclairage différentes,
- les conditions d'éclairage différentes à la prise de vue des différentes images étant obtenues par des combinaisons différentes des intensités d'éclairage assurées par la première source lumineuse (3) et par au moins une autre source lumineuse (4), et
- pour calculer une image résultante on prend trois images simples, on commande deux sources d'éclairage (3, 4) de façon que pour la prise de vue d'une première image simple, la première source d'éclairage (3) éclaire la scène (7) avec une première intensité d'éclairage et la seconde source d'éclairage (4) éclaire la scène (7) avec une seconde intensité d'éclairage différente de la première intensité d'éclairage, et pour la prise de vue d'une seconde image simple, la première source d'éclairage (3) éclaire la scène (7) avec une seconde intensité d'éclairage et la seconde source d'éclairage (4) éclaire la scène (7) avec une première source d'éclairage, et pour la prise de vue d'une troisième image simple, les deux sources d'éclairage (3, 4) éclairent la scène (7) respectivement avec la seconde intensité d'éclairage.

2. Procédé selon la revendication 1, **caractérisé en ce que** le calcul des images simples les unes avec les autres se fait de façon à ce que chaque fois deux pixels de l'image résultante correspondant à des images de la scène éclairée par au moins une source d'éclairage (3, 4), et qui sont éclairées directement par les sources d'éclairage différentes (3, 4) ou par des nombres différents de source d'éclairage (3, 4), présentent la même valeur de pixel, sauf le coefficient représentant la réflectance du point respectif de la scène **en ce qu'**on choisit les opérations mathématiques appliquées aux images de façon que chaque valeur de pixel de l'image résultante représente la réflectance de la surface du point de la scène dont l'image correspond au pixel concerné.

**3.** Procédé selon la revendication 1,
**caractérisé en ce que**
le calcul des images simples les unes avec les autres comprend le calcul de la différence pixel par pixel, de la première et de la seconde image simple.

**4.** Procédé selon la revendication 1 ou 3,
**caractérisé en ce que**
le calcul des images simples les unes avec les autres comprend le calcul de la somme, pixel par pixel, de la première et de la seconde image simple.

**5.** Procédé selon les revendications 1, 3, 4,
**caractérisé en ce que**
le calcul des images simples les unes avec les autres comprend le calcul de la somme, pixel par pixel, de l'amplitude de la différence et de la somme de la première et de la seconde image simple.

**6.** Procédé selon les revendications 1, 3 à 5,
**caractérisé en ce que**
le calcul des images simples les unes avec les autres comprend la soustraction pixel par pixel de la troisième image simple.

**7.** Procédé selon les revendications 1, 3 à 6,
**caractérisé en ce que**
les valeurs des pixels de l'image résultante se représentent par la formule :

$$I_{out} = |I_1 - I_2| + (I_1 + I_2) - 2\,I_3,$$

dans laquelle $I_{out}$ représente la valeur d'un pixel de l'image résultante, $I_1$ représente la valeur de pixel correspondant de la première image simple, $I_2$ représente la valeur de pixel correspondant de la seconde image simple, et $I_3$ représente la valeur de pixel correspondant de la troisième image simple.

**8.** Procédé selon les revendications précédentes,
**caractérisé en ce qu'**
on soumet l'image résultante à un autre traitement d'image dont le résultat sert à la recherche automatique d'une décision dans le cadre d'une surveillance de l'habitacle d'un véhicule automobile (1).

**9.** Dispositif pour générer une image numérique calculée comprenant :

- une première source d'éclairage (3) qui éclaire une scène (7) à prendre en image sous un premier angle d'éclairage avec des intensités d'éclairage différentes,
- un capteur d'image (2) pour une saisie d'images de la scène éclairée (3) et pour émettre un ensemble d'images simples numériques de la scène (7), ces images étant formées d'un ensemble de pixels,
- des moyens de commande pour commander de manière coordonnée la source d'éclairage (3) et le capteur d'image (2) de façon que les images simples de la scène (7) soit prises dans des conditions d'éclairage différentes, et
- un dispositif de traitement de données pour le calcul, pixel par pixel, d'au moins quelques unes des images simples les unes avec les autres,
**caractérisé en ce que**
- il est prévu au moins une autre source d'éclairage (4) permettant d'éclairer la scène (7) sous un angle d'éclairage différent du premier angle d'éclairage et avec des intensités d'éclairage différentes,
- les sources d'éclairage (3, 4) sont commandées par les moyens de commande de façon à réaliser des conditions d'éclairage différentes lors de la prise de vue des images simples par différentes combinaisons des intensités d'éclairage de la première source d'éclairage et d'au moins une autre source d'éclairage (3, 4), et
- pour calculer une image résultante, on prend trois images simples, et
- on commande les deux sources d'éclairage (3, 4) de façon que pour la prise de vue d'une première image simple, la première source d'éclairage (3) éclaire la scène (7) avec une première intensité d'éclairage et la seconde source d'éclairage (4) éclaire la scène (7) avec une seconde intensité d'éclairage différente de la première intensité d'éclairage, et pour la prise de vue d'une seconde image simple, la première source d'éclairage (3) éclaire la scène (7) avec une seconde intensité d'éclairage et la seconde source d'éclairage (4) éclaire la scène (7) avec la première intensité d'éclairage et pour la prise de vue d'une troisième image simple, les deux sources d'éclairage (3, 4) éclairent la scène (7) respectivement avec la seconde intensité d'éclairage.

10. Dispositif selon la revendication 9,
**caractérisé en ce que**
les moyens de commande et le dispositif de traitement de données sont conçus pour mettre en oeuvre un procédé selon les revendications 2 à 7.

11. Dispositif selon la revendication 9 ou 10,
**caractérisé en ce que**
le dispositif est intégré, dans un habitacle de véhicule automobile comme partie d'une installation de surveillance.

12. Dispositif selon les revendications 9 à 11,
**caractérisé en ce que**
les sources d'éclairage (3, 4) émettent une lumière dans le proche infrarouge.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10062977 A1
- DE 19908167 A1
- WO 9904378 A